# EUROPEAN PATENT APPLICATION

(11) **EP 1 400 501 A2**
(43) Date of publication of application: **24.03.2004**
(21) Application number: 03013795.4
(22) Date of filing: 18.06.2003
(51) Int. Cl.: C04B 41/86, B44C 1/17

(54) **High thick decorator means for ceramic use and production method related thereto**

(30) Priority: 21.06.2002 IT MO20020176
(71) Applicant: FRATELLI LAMBERTI S.p.A., I-21041 Albizzate (Varese) (IT)
(72) Inventor: Carbone, Vincenzo, 41049 Sassuolo (IT); Chiavacci, Dario, 21048 Solbiate Arno (IT)
(74) Representative: Luppi, Luigi

(57) **Abstract**

The present invention concerns high thickness decorator means for ceramic use.

In the text, with the expression high thickness decorator means, have been indicated films obtained by deposition on a temporary support of layers of polymeric materials having supporting and bounding function, incorporating particles of glazeable ceramic material and being more than 300 µm thick.

Such decorator means are applied to ceramic or vitreous items and, after firing, gives to the same items the desired aesthetic and/or functional features.

## Description

Most of traditional ceramic products as flooring or coating tile, dishes, items in sanitary ceramic and gift and fancy goods, are formed by a support giving the shape and the mechanical properties to the object, usually having a certain porosity and poor aesthetic features, and being covered by a layer, which is ceramic too, and completely glazed (it has no porosity), said enamel or glazing gives to the object the superficial aesthetic features such as texture and colour and, at the same time represents an impermeable barrier to the liquid and it is usually resistant to the abrading action and to the etching due to chemical agents such as acids, bases, and colouring agents.

The aesthetic finishing of the ceramic material can be completed with the application of glazeable ceramic materials with various colours, which can be applied according to a preset design, also with a three-dimensional path, according to any motif.

The application of the enamel and of the possible décor are altogether very complex, and they use many of the painting, planning and developing and printing techniques, and they form a substantial part of the cost of the finished product.

Also the relevant apparatuses form an important part of the cost of the industrial plant and of its own management.

Similar remarks can be done for the glass industry, since the market requires an aesthetical ennobling of the product: the traditional mechanical or etching operation such as grinding, satinizing, printing are nowadays substituted with the application of glazeable materials that definitively weld to the vitreous support by means of thermal treatments such as tempering or annealing.

The enamelling of the sheets for domestic and industrial use it is another kind of ceramic coating using dry powder or aqueous dispersion, that are applied with painting techniques, such as air-bush or electrostatic deposition, and which is thus completed with a high temperature thermal treatment converting the solid particles in a vitreous continuous layer.

Also in this case a decoration can follow the enamelling process, the decoration is usually carried out by means of silk screen printing or tampography, and the relevant apparatuses have considerable installation and management costs.

The decals, that are transferable decors ready for the application, can enable a remarkable simplification of the ceramic decoration process of ceramic objects, glasses, enamelled sheets, but they are suitable for transferring only thin thickness of glazeable materials, of the order of 4-40 micrometers, so they are not suitable for providing an enamelling, since the thickness required to the enamel's layer is of the order of hundreds of micrometers.

The use of the techniques of decorations with high thickness (from 300 to 2000 µm) by means of decals implies many problems and it have been used for decorating ceramic objects, but not for entirely coating them, as it has been described, for example, in the European Patent Application N. EP 669.215.

The state of the art comprises many descriptions of techniques for producing decals, as those indicated in the European Patent Application N. EP 1.052.175.

The decals production process usually comprises a first stage in which the drawing is imprinted on a support, usually a paper sheet, by utilizing inks made by dispersions of particles of ceramic pigments into organic solvents with the adding of a bounding polymer, and a subsequent stage in which by means of silk screen printing or other techniques it is applied on the drawing a thin and flexible film, generally named as "collodion" formed by a polymeric material dissolved in a appropriate solvent.

The solvents contained in the ink, as much as the solvents forming the collodion, are low-boiling substances, insoluble in water and not biodegradable, and are removed by evaporation, with consequences in terms of environmental impact, and of the onset of problems related to safety and health of workers at work, the inconveniences, disposal and purification.

It is necessary to remind that the most used solvents belong to chemical class of the aromatic white spirits.

The use of solvent-based products needs, on turn, similar solvents for cleaning the machines and the tools.

The solution of such problems involves a substantial rise of the management costs.

The use of aqueous compositions have a lot of problems, particularly the problem of the fluidity of the mixtures with the consequent difficulty for obtaining decorator means with high thickness.

A second technical problem having a non-easy solution, is that the generally used polymers in aqueous solutions tend to give creasing and deformation phenomena of the decor during the firing.

According to an essential aspect of the present invention it is possible to obtain decorator means having high thickness, suitable for coating also the entire surface of the ceramic object, by using aqueous compositions for carrying the polymeric materials and the particles of the glazeable ceramic material.

According to a further aspect of the invention, the high thickness decorator means for ceramic use obtained from aqueous solutions are characterised in that they comprise:
- at least a layer of particulate glazeable ceramic material with thickness comprised between 300 and 2000 µm and containing from 10% to 25% by weight of an acrylic polymer;
- at least a layer of an acrylic polymer with thickness comprised between 20 and 50 µm.

The ceramic elements are chosen in relation with the superficial effect to be obtained as, for example:
- smooth, rough, or "dripped" surface;
- glossy, satin or matt finishing;
- transparent, translucid, or opaque thickness;
and also in relation with the firing cycle fixed for the ceramic item according to the rules well known to the person skilled in the ceramic art.

The preferred acrylic polymers are copolymer of the acrylic or methacrylic acid with acrylic or methacryilic esters, or mixings of said copolymers.

In particular said copolymers are obtained by copolymerisation of a 2% to 5% by weight of acrylic or methacrylic acid with a 95% to 98% by weight of a mixing of acrylic esters, such as methylacrylate, ethyl-acrylate, butyl-acrylate, methyl-methacrylate, ethyl-methacrylate, and mixing thereof.

According to a preferred version of the invention, said mixing is formed by ethyl-acrylate and methyl-methacrylate in a reciprocal weight ratio comprised between 1 and 4.

Usually, the copolymers that are useful for the realisation of the present invention are obtained by direct polymerisation in an aqueous emulsion and can be used in an unaltered state, or they ca be re-dispersed in water after drying process.

The total weight of the high thickness decorator means of the invention varies between 300 and 1000 g/m², preferably between 400 and 600 g/m².

The decorator means of the invention have a tensile strength at break of at least 20 Kg/cm², when measured with an universal testing machine with a rate strength application of 0,1 Kg/sec. The maximal width of the decorator means depends on the dimension of the silk-screen and rotary machines in commerce, and it usually does not exceed 200 cm, whilst the length, in the case of continuous machines operating on coil the length can be of many meters.

The decorator means of the invention are obtained with a multi stage process comprising the following operations:
- applying from 140 to 600 g/m² of glazeable ceramic particles dispersed in an aqueous composition of acrylic polymer having a water content from 30% to 60% by weight on a flexible solid support.
- drying the obtained layer of particles at a temperature comprised between 20 and 60°C;
- applying to said dried layer acrylic polymers in an aqueous composition, said aqueous composition having a water content comprised between 30% and 60% % by weight;
- drying the decorator means at a temperature comprised between 20 and 60°C.

Otherwise the high thickness decorator means for ceramic use according to the invention, which comprises at least two layers of acrylic polymer, are obtained with a multistage process comprising the following operations:
- applying on a flexible solid support acrylic polymers in an aqueous composition, said composition having a water content comprised between 30% and 60% by weight, and drying at a temperature comprised between 20 and 60°C;
- applying to the dried layer of acrylic polymer from 140 to 600 gr/m² of glazeable ceramic particles dispersed in an aqueous composition with water content from 30% to 60% by weight, and drying at a temperature comprised between 20 and 60 °C.

In the above-described methods, 100 parts of said glazeable ceramic particles are dispersed with said acrylic polymer in a percent between 15 and 25 by weight.

The acrylic polymers that can be used for the methods according to the invention, are copolymers of the acrylic or methacrylic acid with acrylic or methacrylic esters, or mixing of said copolymers.

In particular said copolymers are obtained by copolymerisation

Of acrylic or methacrylic acid in a percent from 2 to 5 by weight with a 95 to 98 weight percent of mixing of acrylic esters, such as methacrylate, ethyl-acrylate, butyl-acrylate, methyl-methacrylate, butyl-methacrylate or mixing thereof.

According a preferred version of the invention, said mixing is formed by ethyl-acrylate and methyl-acrylate in a reciprocal weight ratio comprised between 1 and 4.

Usually, the glazeable ceramic particles dispersed and the acrylic polymers are applied by silkscreen printing.

The solid flexible supports that can be used for carrying out the present invention, are preferably paper or thin card having a weight of about 170 g/m², that are superficially coated with polyethylene: such coating has the scope to obtain a surface with low adhesiveness in relation to the following applications.

Also a polymeric film can be used as flexible solid support.

The above described methods enable to incorporate into the decorator means frits and ceramic pigments, that are chosen in relation to the decorative effect to be obtained and to the firing cycle to which the ceramic item is subjected according to the rules that are well known to the person skilled in the ceramic art.

Said incorporation is carried out through a silkscreen technique, thus obtaining figure, also polychromatic, before applying the layer of glazeable ceramic particles.

The acrylic polymeric water based compositions enable to eliminate the use in the production of the decorator means of the organic solvents, and there is no need to store, or to manipulate them, and the emission of the relevant vapours and aerosols are also eliminated.

The film decorator means that are object of the present invention represent an advantageous simplification in the production of ceramic items, or glassware, or sheets, since a single manual or in case automated application, replaces all the enamelling, and the aesthetic and functional ennobling operations, and consequently the relevant plants and management are not more necessary.

The high thickness decorator means of the invention is a solid and plastic sheet (which resists at least to two complete folding operations through 180°) obtained by polymers incorporating ceramic materials.

The plastic and flexible feature of the sheet enables to apply the sheet of geometrically complex surface, that cannot be decorated with the common silkscreen printing, or rotary printing or tampography techniques.

The decorator means of the present invention enables to apply enamelling also 2 mm thick. Such thicknesses are sufficient to give three-dimensional effects that are useful either for aesthetic and functional reasons, for example anti-skid finishing for flooring, or for technical or sanitary ceramic items.

The decorator means of the invention are produced with glazeable particulate ceramic materials that are bounded and supported by polymeric material suitable for forming films and that are contained in aqueous formulations, such as solutions and emulsions, that are solvent-free and consequently have no problems of environmental impact, inconvenience, and workers' and community's health.

The decorator means is separated from the solid and flexible support by a simple mechanical action before being applied on the surface of the item to be finished and ennobled.

Said item is usually a ceramic item which may be a shaped green ware (moulded, poured, extruded) in the event of single firing or a "biscuit" (already fired in a first firing) in the event of double firing.

Alternatively the item can be a plan or hollow glass item or a sheet.

In any case a glue for decal has to be applied in advance (with a brush, an airbrush, or any other suitable means) on the surface, so as to assure the perfect adhesion of the decorator means to the surface, said adhesion having to persist during the firing, degassing and the combustion of the organic-polymeric part, till a chemical-ceramic bound occurs.

Surprisingly, the organic components of the high thick decorator means of the present invention enable to remove any thermo-shrinkage effect, which will unavoidably cause a loose deposition of the ceramic material, during the fabrication during the drying, and in the first steps of the firing cycles; in particular said organic components enable to obtain decorator means having a coefficient of thermal expansion near to that of the ceramic material on which the decorator means are applied.

Furthermore, all the organic components of the high thick decorator means have been selected in order to obtain, during the firing, the elimination of the same organic component by volatilisation in a complete but slow and regular way, thus avoiding reboiling or explosive effects that would have as effect the complete crumbling of the applied ceramic layer.

## Claims

1. High thickness decorator means for ceramic use obtained from aqueous composition, said means comprising:
- at least a layer of glazeable ceramic particulate layer having a thickness comprised between 300 and 200 µm and containing from 10% to 25% by weight of an acrylic polymer;
- at least an acrylic polymer layer having a thickness comprised between 20 and 50 µm.

2. High thickness decorator means for ceramic use obtained from aqueous compositions according the claim 1, wherein said acrylic polymers are copolymers of the acrylic or methacryilic acid with acrylic or methacryilic esters, or mixing of said copolymers.

3. High thickness decorator means for ceramic use obtained from aqueous compositions according the claim 1, or 2, wherein said copolymers are obtained by copolymerisation of acrylic or methacryilic acid in a percentage comprised between 2% and 5% by weight with a weight percent between 95% and 98% of a mixing of acrylic esters.

4. High thickness decorator means for ceramic use obtained from aqueous compositions according to claim 2, or 3, wherein said mixing of acrylic asters is formed by methyl acrylate, ethyl acrylate, butyl acrylate, methyl methacrylate, ethyl methacrylate, butyl methacrylate, or mixing thereof.

5. High thickness decorator means for ceramic use obtained from aqueous compositions according any one of claims 2 to 4 **characterised in that** said mixing comprises ethyl acrylate and methyl acrylate in a mutual weight ratio comprised between 1 and 4.

6. Method for obtaining high thickness decorator means for ceramic use **characterised in that**:
- applying on a flexible solid support from 140 to 160 g/m² of glazeable ceramic particles dispersed in an aqueous composition of acrylic polymers with a water content comprised between 30% and 60% by weight;
- drying the obtained layer of particles at a temperature comprised between 20 and 60°C;
- applying to said dried layer acrylic polymers in an aqueous composition, said composition having a water content comprised between 30% and 60% by weight;
- drying the decorator means at a temperature comprised between 20 and 60 °C.

7. Method for obtaining high thickness decorator means for ceramic use, as claimed in claim 6, **characterised in that** 100 parts of said glazeable ceramic particles are dispersed with 15% to 25% by weight of said acrylic polymers:

8. Method for obtaining high thickness decorator means for ceramic use, as claimed in claim 6, or 7, **characterised in that** said acrylic polymers are copolymers of the acrylic or methacrylic acid with acrylic or methacrylic esters, or mixing of said copolymers.

9. Method for obtaining high thickness decorator means for ceramic use, as claimed in claim 8, **characterised in that** said copolymers are obtained by copolymerisation of acrylic or methacrylic acid in a percentage from 2% to 5%, by weight with a mixing of acrylic esters in a percentage from 95 to 98 by weight.

10. Method for obtaining high thickness decorator means for ceramic use as claimed in claim 9, **characterised in that** said mixing of acrylic esters comprises methyl acrylate, ethyl acrylate, butyl acrylate, methyl methacrylate, ethyl methacrylate, butyl methacrylate, or mixing thereof.

11. Method for obtaining high thickness decorator means for ceramic use as claimed in claim 9, or 10, **characterised in that** mixing comprises ethyl acrylate and methyl methacrylate in a mutual weight ratio comprised between 1 and 4.

12. Method for obtaining high thickness decorator means for ceramic use said decorator means comprising at least two distinct layers of an acrylic polymer, **characterised in that**:
- applying on a solid flexible support acrylic polymers in an aqueous composition, said composition having a water content comprised between 30% and 60% by weight, and drying at a temperature comprised between 20 and 60 °C;
- applying on the layer of dried acrylic polymer thus obtained from 140 to 160 g/m² of glazeable ceramic particles dispersed in an aqueous composition of acrylic polymers having a water content from 30 to 60 percent by weight, and drying at a temperature comprised between 20 and 60 °C;
- applying on the dried layer thus obtained, acrylic polymers in an aqueous composition, said composition having a water content comprised between 30% and 60% by weight;
- drying the decorator means at a temperature comprised between 20 and 60 °C.

13. Method for obtaining high thickness decorator means for ceramic use, as claimed in claim 12, **characterised in that** 100 parts of said ceramic glazeable particles are dispersed with said acrylic polymers in percentage by weight comprised between 15% and 25%.

14. Method for obtaining high thickness decorator means for ceramic use, as claimed in claim 12, or 13, **characterised in that** said acrylic polymers are copolymers of the acrylic or methacrylic acid with acrylic or methacrylic esters, or mixing of said copolymers.

15. Method for obtaining high thickness decorator means for ceramic use, as claimed in claim 14, **characterised in that** said copolymers are obtained by copolymerisation of acrylic or methacrylic acid in a percentage by weight from 2% to 5%, with a mixing of acrylic esters in a percentage by weight from 95% to 98%.

16. Method for obtaining high thickness decorator means for ceramic use, as claimed in claim 15, **characterised in that** said mixing of acrylic esters is formed by methyl acrylate, ethyl acrylate, butyl acrylate, methyl methacrylate, ethyl methacrylate, butyl methacrylate, or mixing thereof.

17. Method for obtaining high thickness decorator means for ceramic use, as claimed in claim 15, or 16, **characterised in that** said mixing is formed by ethyl acrylate and methyl methacrylate in a mutual weight ratio comprised between 1 and 4.
